# EUROPEAN PATENT SPECIFICATION

(11) **EP 2 910 538 B1**
(45) Date of publication and mention of the grant of the patent: **12.04.2023**
(21) Application number: 13847842.5
(22) Date of filing: 20.09.2013
(51) Int. Cl.: C06D 5/06, B60R 21/264

(54) **GAS-GENERATING-AGENT COMPOSITION**
ZUSAMMENSETZUNG EINES GASERZEUGUNGSMITTELS
COMPOSITION D'AGENT GÉNÉRANT DU GAZ

(30) Priority: 18.10.2012 JP 2012230684
(43) Date of publication of application: 26.08.2015
(73) Proprietor: Daicel Corporation, Osaka-shi, Osaka 530-0011 (JP)
(72) Inventor: FUJISAKI Yoji, Tatsuno-shi Hyogo 671-1681 (JP); MATSUDA Naoki, Tatsuno-shi Hyogo 671-1681 (JP); YAMAZAKI Masayuki, Tatsuno-shi Hyogo 671-1681 (JP)
(74) Representative: Grünecker Patent- und Rechtsanwälte PartG mbB
(86) International application number: PCT/JP2013/075408
(87) International publication number: WO 2014/061396

(56) References cited:
- WO-A1-2012/128302
- WO-A1-2012/133072
- JP-A- H09 328 389
- JP-A- 2001 192 288
- JP-A- 2001 192 288
- JP-A- 2010 269 969
- US-A- 5 608 183
- US-A1- 2012 055 593

## Description

### Technical Field

The present invention relates to a gas generating composition according to claim 1 that can be used in a gas generator for an airbag apparatus.

### Background Art

A coolant/filter is used in gas generators to decrease temperature of combustion gas and filter combustion residues, but since the mass ratio of the coolant/filter in the entire gas generator is large, it is demanded to reduce the coolant/filter in weight.

When the combustion temperature of a gas generating agent used in the gas generator is decreased, a thermal load on the coolant/filter can be reduced. Therefore, the usage amount (mass) of the coolant/filter can be reduced and the weight of the entire gas generator can be decreased.

JP-A No. H09-328389 discloses a composition including guanidine nitrate and basic copper nitrate described in the Examples.

In JP-A No. 2001-220282, since a metal oxide is generated as a combustion residue, the aggregation of the combustion residue can be inhibited by itself and the residue formed by fine particles is generated.

In WO-A No. 03/016244, the combustion temperature is sufficiently lowered and the coolant/filter can be reduced in weight.
US2012/055593A1, US5608183A, JP2001192288A, WO2012/133072A1 and WO2012/128302A1 also disclose gas generating compositions.

### SUMMARY OF THE INVENTION

As a means for resolving the aforementioned problem, the present invention provides a gas generating composition in accordance with claim 1. Preferred embodiments are defined in dependent claims 2 to 8.

### BRIEF DESCRIPTION OF THE DRAWINGS

The present invention will become more fully understood from the detailed description given hereinbelow and the accompanying drawings which are given by way of illustration only, and thus are not limitative of the present invention and wherein:
[Fig. 1] Fig. 1 is a photo illustrating the state of the residue after the residue aggregation test using the composition of Example 4; and
[Fig. 2] Fig. 2 is a photo illustrating the state of the residue after the residue aggregation test using the composition of Comparative Example 1.

### DETAILED DESCRIPTION OF THE INVENTION

In JP-A No. H09-328389, the combustion temperature is not sufficiently reduced. Therefore, in the case of being used in a gas generator, the coolant/filter is difficult to reduce in weight.

In JP-A No. 2001-220282, a filter with small apertures is required. Therefore, in the case of being used in a gas generator, the coolant/filter is difficult to reduce in weight.

In WO-A No. 03/016244, there is a room for improvement in terms of ignition ability.

The present invention is to provide a gas generating composition that reduces the combustion temperature and increase the filtering ability of a coolant/filter by producing a lumpy combustion residue, without pulverizing.

The gas generating composition of the present invention easily forms a lumpy combustion residue, has a low combustion temperature, and also demonstrates good ignition ability.

### Detailed Description of Invention

The fuel included in the gas generating composition of the present invention is formed by a combination of a first fuel component and a second fuel component.

It is also preferred that the combustion temperature could be decreased by including the first fuel component and that the ignition ability be increased by including the second fuel component.

The first fuel component is guanidine nitrate.

The second fuel component is nitroguanidine.

In order to decrease the combustion temperature and improve the ignition ability, the fuel includes the first fuel component and second fuel component at the following ratios:
The content ratio of the first fuel component is 3 to 25 % by mass, and preferably 5 to 10 % by mass; and
The content ratio of the second fuel component is 3 to 30% by mass, and preferably 10 to 28% by mass.

An oxidizing agent is present in the gas generating composition of the present invention.

The oxidizing agent is formed by basic copper nitrate and basic copper carbonate, which areused in combination with each other.

The oxidizing agent selected from basic copper nitrate and basic copper carbonate is used, and the content ratio thereof in the composition is preferably 20 to 80 % by mass, more preferably 50 to 75 % by mass.

The content ratio of basic copper nitrate in the total amount is 25 to 65 % by mass, and the ratio of basic copper carbonate is 1 to 50 % by mass, preferably 3 to 30 % by mass.

The gas generating composition of the present invention includes the above-described fuel and oxidizing agent and meets the below-described requirements (a), (b), and (c).

Where known aluminum hydroxide is compounded as a cooling agent in the gas generating composition, the combustion temperature can be reduced, but because the combustion residue is pulverized, it is necessary to increase a density of the coolant/filter in order to increase the filtering ability, and the coolant/filter cannot be reduced in weight.

The gas generating composition of the present invention resolves this problem by including the above-described fuel and oxidizing agent and meeting the following requirements (a), (b), and (c).

### <Requirement (a)>

Copper is included in the composition. Copper is contained as compounds thereof, but may be also included as simple metals.

The gas generating composition includes a binder and various additives in addition to the fuel and the oxidizing agent, and compositions in which various metals are included in those components can be used.

Metals with a smaller ionization tendency such as copper, silver, platinum, and gold easier remain as simple metals in the combustion residue and easier generate lumpy residues. Therefore, they can be easily filtered with a coolant/filter, and a coolant/filter with a large mesh size (small density) can be used, thereby making it possible to reduce weight.

Conversely, where the ionization tendency increases, finely powdered metal oxides are easily formed after the combustion, a coolant/filter with a smaller mesh size (higher density) should be used for filtering, and the weight cannot be reduced.

Metals with a standard electrode potential higher/lower than 0.00 V, which is the standard electrode potential of hydrogen and taken as a reference, are assumed to have a small/large ionization tendency.

In the requirement (a), the content of copper in all of the metals in the composition is preferably not less than 92 % by mass, or 92 to 100 % by mass, more preferably 95 to 100 % by mass, even more preferably 95 to 99 % by mass.

The content of the metal in all of the metals in the composition, as referred to herein, is determined by theoretical computations from the gas generating composition used.

### <Requirement (b)>

The combustion residue of the composition is formed substantially by copper.

The expression "the combustion residue is formed substantially by copper" used herein means that the content of the metal component in the combustion residue is 93 to 99 % by mass. A metal oxide or a metal compound including the metal may be included as a balance.

The content of the metal component in the combustion residue, as referred to herein, is theoretically computed from the gas generating composition used. Where the requirement (b) is met, the aggregation of the metal induced by metal oxide is not inhibited and, therefore, a lumpy combustion residue is easily formed.

### <Requirement (c)>

The combustion temperature of the composition is less than a temperature obtained by adding 200°C to the melting point of copper contained therein. Thus, the combustion temperature is less than a value obtained by adding 200°C to the value of the melting point (°C) of copper.

Where the requirement (c) is met, the combustion residue easily becomes lumpy.

The composition in accordance with the present invention can also include a binder and known additives serving to adjust the burning rate of the gas generating composition and purify the combustion gas, provided that the requirements (a), (b), and (c) are met and the purpose of the present invention can be attained. The composition in accordance with the present invention meet the requirements (a), (b), and (c) by using copper. Thus, in the requirement (a), the composition include copper.

The binder can be one or two or more selected from carboxymethyl cellulose (CMC), carboxymethyl cellulose sodium salt (CMCNa), carboxymethyl cellulose potassium salt, carboxymethyl cellulose ammonium salt, cellulose acetate, cellulose acetate butyrate (CAB), ethyl cellulose (EC), hydroxyethyl cellulose (HEC), microcrystalline cellulose, polyacryl hydrazide, a copolymer of acrylamide and a metal salt of acrylic acid, a copolymer of polyacrylamide and a polyacrylic acid ester compound, acrylic rubber, and silicone.

Known additives can include metal oxides such as copper (II) oxide, iron oxide, zinc oxide, cobalt oxide, manganese oxide, molybdenum oxide, nickel oxide, bismuth oxide, silica, and alumina; cobalt carbonate, calcium carbonate; complex compounds of metal oxides or hydroxides such as Japanese acid clay, kaolin, talc, bentonite, diatomaceous earth, and hydrotalcite; metal acid salts such as sodium silicate, mica molybdate, cobalt molybdate, and ammonium molybdate; molybdenum disulfide, calcium stearate, silicon nitride, silicon carbide, metaboric acid, boric acid, and anhydrous boric acid, provided that they do not inhibit the aggregation of the combustion residue including metal.

The gas generating composition in accordance with the present invention can be molded to the desired shape, and can be in the form of a molded article of a singleperforated columnar shape, a perforated (porous) columnar shape, or a pellet. The molded article can be manufactured by adding water or an organic solvent to the gas generating composition, mixing and extrusion-molding (a molded article in the form of a cylinder having a single hole or a perforated (porous) cylinder), or by compression-molding with a pelletizer or the like (a molded article in a shape of a pellet).

The gas generating composition in accordance with the present invention and a molded article obtained therefrom can be used, for example, in an airbag inflator of a driver seat, an airbag inflator of a passenger seat next to the driver, a side airbag inflator, an inflator for an inflatable curtain, an inflator for a knee bolster, an inflator for an inflatable seat belt, an inflator for a tubular system, and an inflator for a pretensioner, of various vehicles.

The inflator using the gas generating composition in accordance with the present invention or a molded article obtained therefrom may be of a pyrotechnic type in which a gas supplying source is only a gas generating agent and of a hybrid type which uses both a compressed gas such as argon and a gas generating agent.

The gas generating composition in accordance with the present invention or a molded article obtained therefrom can be also used as an igniting agent called an enhancer (or a booster) or the like, serving to transmit the energy of a detonator or a squib to the gas generating agent

### Examples

### Example 1

Molded articles made of the gas generating compositions including the components indicated in Table 1 were manufactured. The properties indicated in Table 1 were measured with respect to the compositions. The results are shown in Table 1.

### (1) Residue aggregation ability

○: a lumpy shape can be visually recognized; the lumps do not collapse when pinched between the fingers;
×: a powder shape is visually recognized, or though a lumpy shape can be visually recognized, the lumps are crushed into a powder when pinched between the fingers.

### (2) Combustion temperature (K)

A combustion temperature based on theoretical computations.

### (3) Pressure index

A pressure index was determined by measuring the burning rate by the following method.

### (Method for preparing a round columnar strand).

The molded articles of the compositions of the examples and the comparative examples were pulverized in a mortar, and a powder that has passed through a metal net with a mesh size of 500 µm was loaded into a receiving die of a predetermined die.

The powder was then compressed under a pressure of 21.78 KN by using a hydraulic pump from the pestle end surface, held for 5 seconds in the compressed state, then taken out, and molded under a surface pressure of 30.42 KN/cm² into a round columnar strand with an outer diameter of 9.55 mm and a length of 12.70 mm.

The obtained round columnar molded article was dried for 16 hours at 110°C. An epoxy resin adhesive ("Bond Quick 30", produced by Konishi Co., Ltd.) was then coated on the side surface of the round columnar molded article and cured. A sample that is ignited only from the end surface and is not ignited from the side surface was thus obtained.

### (Method for measuring the burning rate)

The round columnar strand serving as a sample was disposed in a SUS sealed cylinder with an internal volume of 1 liter, the cylinder interior was entirely purged with nitrogen, and the pressure inside thereof was then raised to and stabilized at 6860 kPa. A predetermined electric current was then allowed to flow to a nichrome wire that was brought into contact with the end surface of the strand and the strand was ignited and combusted by the meltdown energy thereof.

Changes in pressure inside the cylinder with time were verified with a recorder chart, the time elapsed from the start of combustion to the peak of pressure increase was verified from the chart memory, and the numerical value obtained by dividing the strand length before the combustion by the elapsed time was taken as the burning rate.

The tests in which the pressure was increased to and stabilized at 4900 kPa and 8820 kPa were conducted in the same manner as described hereinabove.

### (Pressure index)

The burning rate under a nitrogen atmosphere was measured under a pressure of 4900, 6860, and 8820 kPa by using the round columnar strands manufactured by the above-described method.

In the Examples, the pressure index within a range of 4900 kPa to 8820 kPa is shown.

**Table 1**

| | Gas generating composition | | | | | | | | | | Residue aggregation ability | Combustion temperature (K) | Oxygen balance (g/g) | Pressure index | Content of copper in solid residue component (wt%) |
|---|---|---|---|---|---|---|---|---|---|---|---|---|---|---|---|
| | MC | GN | NQ | BCN | BCC | SrN | CMCNa | Al(OH)₃ | Japanese Acid Clay | Content of copper in entire metal (wt%) | | | | | |
| Example 1∗ | 14.4 | | 11.4 | 64.2 | 5.0 | | 5.0 | | | 99.1 | ○ | 1522 | -0.007 | 0.10 | 97.3 |
| Example 2∗ | 1.4 | | 26.9 | 26.7 | 40.0 | | 5.0 | | | 98.0 | ○ | 1518 | -0.007 | 0.10 | 97.3 |
| Example 3∗ | 8.1 | | 22.4 | 41.5 | 25.0 | | 3.0 | | | 99.2 | ○ | 1545 | -0.007 | 0.10 | 98.4 |
| Example 4∗ | 6.0 | | 17.9 | 44.2 | 25.0 | | 7.0 | | | 98.3 | ○ | 1490 | -0.007 | 0.10 | 96.4 |
| Example 5∗ | 7.8 | | 17.5 | 44.7 | 25.0 | | 5.0 | | | 98.8 | ○ | 1495 | 0.000 | 0.10 | 97.0 |
| Example 6∗ | 5.4 | | 25.4 | 39.2 | 25.0 | | 5.0 | | | 98.6 | ○ | 1565 | -0.020 | 0.10 | 97.2 |
| Example 7 | | 19.6 | 13.0 | 28.4 | 34.0 | | 5.0 | | | 98.1 | ○ | 1523 | -0.007 | - | 96.6 |
| Example 8 | | 34.8 | 1.0 | 33.2 | 26.0 | | 5.0 | | | 98.4 | ○ | 1532 | -0.007 | - | 97.0 |
| Example 9 | | 0.6 | 28.0 | 22.4 | 44.0 | | 5.0 | | | 97.6 | ○ | 1512 | -0.007 | - | 97.3 |
| Example 10 | | 26.4 | 11.0 | 25.6 | 34.0 | | 3.0 | | | 98.7 | ○ | 1542 | -0.007 | - | 98.2 |
| Example 11 | | 12.8 | 15.0 | 31.2 | 34.0 | | 7.0 | | | 97.6 | ○ | 1503 | -0.007 | - | 96.2 |
| Example 12 | | 23.9 | 7.9 | 29.2 | 34.0 | | 5.0 | | | 98.1 | ○ | 1502 | 0.000 | - | 97.2 |
| Comparative Ex.1 | | 40.7 | | 49.3 | | | 5.0 | 5.0 | | 94.7 | × | 1700 | -0.009 | 0.30 | 85.9 |
| Comparative Ex.2 | | 38.0 | | 47.0 | | | 5.0 | 10.0 | | 90.5 | × | 1582 | -0.009 | - | 76.7 |
| Comparative Ex.3 | | 35.4 | | 44.6 | | | 5.0 | 15.0 | | 86.3 | × | 1462 | -0.009 | - | 68.6 |
| Comparative Ex.4 | | | 34.4 | | | 49.5 | 9.4 | | 6.7 | 0.0 | × | 2410 | -0.013 | 0.60 | 0.0 |
| Comparative Ex.5 | | | 33.8 | | | 55.2 | 10.0 | | 1.0 | 0.0 | × | 2460 | 0.004 | 0.60 | 0.0 |
| Comparative Ex.6 | | 52.1 | | 47.9 | | | | | | 100.0 | × | 1889 | 0.007 | - | 75.7 |

| | | | | | | | | | | | | | | | |
|---|---|---|---|---|---|---|---|---|---|---|---|---|---|---|---|
| * Examples 1 to 6 and 8 to 10 are reference examples. | | | | | | | | | | | | | | | |

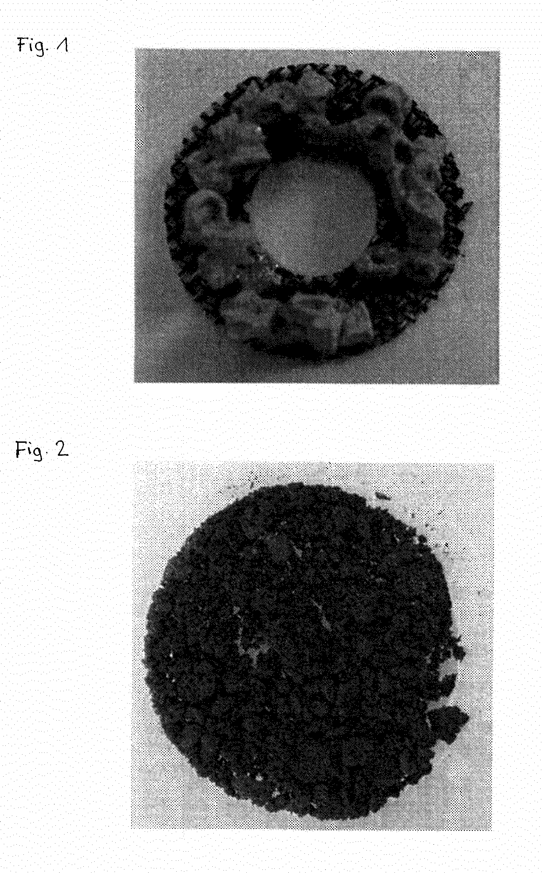

Examples 7, 11 and 12 meet the requirements (a), (b), and (c). As a result, a lumpy combustion residue was easily formed, the combustion temperature was low, and good ignition ability was demonstrated. The combustion residue of Example 4 was lumpy as depicted in Fig. 1 and did not collapse when pinched between the fingers. The same result was obtained in the other Examples.

None of Comparative Examples 1 to 6 meet the requirements (a), (b), and (c). As a result, the combustion residue was in the form of a fine powder, the combustion temperature was high, and the pressure index was also high. In Comparative Example 3, the combustion temperature was low because aluminum hydroxide was included.

The combustion residue in Comparative Example 5 was in the form of a powder. The combustion residue in Comparative Example 1 was in the form of lumps, but the lumps were readily crushed into a powder when pinched between the fingers (see Fig. 2).

## Claims

1. A gas generating composition comprising a fuel and an oxidizing agent, wherein
the fuel consists of a combination of a first fuel component being guanidine nitrate and a second fuel component being nitroguanidine,
the oxidizing agent is formed by a combination of basic copper nitrate and basic copper carbonate,
the first fuel component is contained in an amount of 3 to 25 % by mass,
the second fuel component is contained in an amount of 3 to 30% by mass,
the basic copper nitrate is contained in an amount of 25 to 65 % by mass,
the basic copper carbonate is contained in an amount of 1 to 50 % by mass,
the content of copper in the combustion residue of the composition is 93 to 99 % by mass, and
the combustion temperature of the composition is less than a temperature obtained by adding 200°C to the melting point of copper contained therein.

2. The gas generating composition of claim 1, wherein the first fuel component is contained in an amount of 5 to 10 % by mass.

3. The gas generating composition of claim 1 or 2, wherein the second fuel component is contained in an amount of 10 to 28% by mass.

4. The gas generating composition of any one of claims 1 to 3, wherein the basic copper carbonate is contained in an amount of 3 to 30 % by mass.

5. The gas generating composition of any one of claims 1 to 4, wherein the content ratio of copper in all of the metals in the composition is not less than 92 % by mass.

6. The gas generating composition of claim 5, wherein the content ratio of copper in all of the metals in the composition is 95 to 99 % by mass.

7. The gas generating composition of any one of claims 1 to 6, wherein the composition includes a binder.

8. The gas generating composition of claim 7, wherein the binder is one or more selected from carboxymethyl cellulose, carboxymethyl cellulose sodium salt, carboxymethyl cellulose potassium salt, carboxymethyl cellulose ammonium salt, cellulose acetate, cellulose acetate butyrate, ethyl cellulose, hydroxyethyl cellulose, microcrystalline cellulose, polyacryl hydrazide, a copolymer of acrylamide and a metal salt of acrylic acid, a copolymer of polyacrylamide and a polyacrylic acid ester compound, acrylic rubber, and silicone.

## Patentansprüche

1. Gaserzeugende Zusammensetzung, umfassend einen Brennstoff und ein Oxidationsmittel, wobei
der Brennstoff aus einer Kombination einer ersten Brennstoffkomponente, die Guanidinnitrat ist, und einer zweiten Brennstoffkomponente, die Nitroguanidin ist, besteht,
das Oxidationsmittel aus einer Kombination von basischem Kupfernitrat und basischem Kupfercarbonat gebildet ist,
die erste Brennstoffkomponente in einer Menge von 3 bis 25 Massenprozent enthalten ist,
die zweite Brennstoffkomponente in einer Menge von 3 bis 30 Massenprozent enthalten ist,
das basische Kupfernitrat in einer Menge von 25 bis 65 Massenprozent enthalten ist,
das basische Kupfercarbonat in einer Menge von 1 bis 50 Massenprozent enthalten ist,
der Gehalt an Kupfer im Verbrennungsrückstand der Zusammensetzung 93 bis 99 Massenprozent ist, und
die Verbrennungstemperatur der Zusammensetzung unter einer Temperatur liegt, die durch Addieren von 200 °C zum Schmelzpunkt des darin enthaltenen Kupfers erhalten wird.

2. Die gaserzeugende Zusammensetzung nach Anspruch 1, wobei die erste Brennstoffkomponente in einer Menge von 5 bis 10 Massenprozent enthalten ist.

3. Die gaserzeugende Zusammensetzung nach Anspruch 1 oder 2, wobei die zweite Brennstoffkomponente in einer Menge von 10 bis 28 Massenprozent enthalten ist.

4. Die gaserzeugende Zusammensetzung nach irgendeinem der Ansprüche 1 bis 3, wobei das basische Kupfercarbonat in einer Menge von 3 bis 30 Massenprozent enthalten ist.

5. Die gaserzeugende Zusammensetzung nach irgendeinem der Ansprüche 1 bis 4, wobei der Gehaltsanteil von Kupfer in allen Metallen in der Zusammensetzung nicht weniger als 92 Massenprozent ist.

6. Die gaserzeugende Zusammensetzung nach Anspruch 5, wobei der Gehaltsanteil von Kupfer in allen Metallen in der Zusammensetzung 95 bis 99 Massenprozent ist.

7. Die gaserzeugende Zusammensetzung nach irgendeinem der Ansprüche 1 bis 6, wobei die Zusammensetzung ein Bindemittel beinhaltet.

8. Die gaserzeugende Zusammensetzung nach Anspruch 7, wobei das Bindemittel eines oder mehrere ist, ausgewählt aus Carboxymethylcellulose, Carboxymethylcellulose-Natriumsalz, Carboxymethylcellulose-Kaliumsalz, Carboxymethylcellulose-Ammoniumsalz, Celluloseacetat, Celluloseacetat, Celluloseacetatbutyrat, Ethylcellulose, Hydroxyethylcellulose, mikrokristalline Cellulose, Polyacrylhydrazid, einem Copolymer aus Acrylamid und einem Metallsalz der Acrylsäure, einem Copolymer aus Polyacrylamid und einer Polyacrylsäureesterverbindung, Acrylkautschuk und Silikon.

## Revendications

1. Composition générant du gaz comprenant un combustible et un comburant,
le combustible consiste en une association d'un premier composant combustible qui est du nitrate de guanidine et d'un second composant combustible qui est la nitroguanidine,
le comburant est formé par association d'un nitrate de cuivre basique et d'un carbonate de cuivre basique,
le premier composant combustible est présent à hauteur de 3 à 25 % en masse,
le second composant combustible est présent à hauteur de 3 à 30 % en masse,
le nitrate de cuivre basique est présent à hauteur de 25 à 65 % en masse,
le carbonate de cuivre basique est présent à hauteur de 1 à 50 % en masse,
la teneur en cuivre dans le résidu de combustion de la composition va de 93 à 99 % en masse, et
la température de combustion de la composition est inférieure à une température obtenue en ajoutant 200 °C au point de fusion du cuivre qu'elle contient.

2. Composition générant du gaz selon la revendication 1, dans laquelle le premier composant combustible est présent à hauteur de 5 à 10 % en masse.

3. Composition générant du gaz selon la revendication 1 ou 2, dans laquelle le second composant combustible est présent à hauteur de 10 à 28 % en masse.

4. Composition générant du gaz selon l'une quelconque des revendications 1 à 3, dans laquelle le carbonate de cuivre basique est présent à hauteur de 3 à 30 % en masse.

5. Composition générant du gaz selon l'une quelconque des revendications 1 à 4, dans laquelle le rapport de teneur en cuivre vis-à-vis de tous les métaux dans la composition n'est pas inférieur à 92 % en masse.

6. Composition générant du gaz selon la revendication 5, dans laquelle le rapport de teneur en cuivre vis-à-vis de tous les métaux dans la composition va de 95 à 99 % en masse.

7. Composition générant du gaz selon l'une quelconque des revendications 1 à 6, la composition comprenant un liant.

8. Composition générant du gaz selon la revendication 7, dans laquelle le liant est au moins un liant choisi parmi carboxyméthylcellulose, sel de sodium de carboxyméthylcellulose, sel de potassium de carboxyméthylcellulose, sel d'ammonium de carboxyméthylcellulose, acétate de cellulose, acétate-butyrate de cellulose, éthylcellulose, hydroxyéthylcellulose, cellulose microcristalline, hydrazide de polyacryle, un copolymère d'acrylamide et d'un sel métallique de l'acide acrylique, un copolymère de polyacrylamide et d'un composé ester de poly(acide acrylique), caoutchouc acrylique et silicone.
